# EUROPEAN PATENT SPECIFICATION

(11) **EP 2 087 344 B1**
(45) Date of publication and mention of the grant of the patent: **27.02.2019**
(21) Application number: 07826938.8
(22) Date of filing: 31.10.2007
(51) Int. Cl.: G01N 21/64, G01J 3/44, G02B 5/30

(54) **BIOSENSOR USING WIRE-GRIDS FOR INCREASING CAVITY ENERGY**
BIOSENSOR MIT DRAHTGITTERN ZUR ERHÖHUNG EINER HOHLRAUMENERGIE
BIODÉTECTEUR UTILISANT DES GRILLES DE FIL POUR AUGMENTER L'ÉNERGIE DE CAVITÉ

(30) Priority: 31.10.2006 EP 06123216
(43) Date of publication of application: 12.08.2009
(73) Proprietor: Koninklijke Philips N.V., 5656 AE Eindhoven (NL)
(72) Inventor: KLUNDER, Derk, J., W., 5656 AE Eindhoven (NL); HERPEN, Maarten, M., J., W., 5656 AE Eindhoven (NL)
(74) Representative: van Velzen, Maaike Mathilde
(86) International application number: PCT/IB2007/054425
(87) International publication number: WO 2008/053442

(56) References cited:
- WO-A-2007/034395
- WO-A-2007/072418
- US-A1- 2006 034 729
- US-A1- 2006 056 463
- LIU Y ET AL: "Biosensing based upon molecular confinement in metallic nanocavity arrays; Biosensing based upon molecular confinement in metallic nanocavity arrays" NANOTECHNOLOGY, IOP, BRISTOL, GB, vol. 15, no. 9, 1 September 2004 (2004-09-01), pages 1368-1374, XP020068108 ISSN: 0957-4484

## Description

### FIELD OF THE INVENTION

The invention relates to a biosensor, and in particular to a biosensor for detecting luminescence generated by biomolecules.

### BACKGROUND OF THE INVENTION

Biological samples containing biological molecules can be analysed by illuminating the biological sample with a beam of radiation and detecting the emitted light. In order to be able to detect the presence, alternatively the quantity, of a particular biological molecule, commonly referred to as the target molecule, a method where the target molecule bonds to a corresponding probe molecule may be utilised. Target molecules comprise DNA, RNA, cells, proteins, viruses, bacteria and antibodies, etc. Accordingly, target molecules capable of bonding to probe molecules form target-probe pairs, for example antibody-antigen, cell-antibody and receptor-ligand pairs. Further examples include bonding or hybridization of for instance DNA-DNA pairs, RNA-RNA pairs and DNA-RNA hybrids. Luminophores, for example fluorophores, may be attached to the target molecules, alternatively the probe molecules, so that the presence or quantity of the target molecules can be determined by detecting the luminescence emitted from the luminophores.

In order to detect the presence or quantity of the target molecule in a dedicated volume or bound at a dedicated binding surface, a problem arises in distinguishing between the luminescence and the illumination radiation since the power of the luminescence typically is much lower than the power of the illumination radiation. Another problem arises in distinguishing between the luminescence generated by target molecules present in a dedicated volume or bound at a dedicated binding surface and the luminescence generated elsewhere. Accordingly, it may be seen as a problem to generate sufficient and preferably sufficiently localized radiation power of the luminescence from a detection system.

Hence, a biosensor would be advantageous, and in particular a more efficient and/or reliable biosensor would be advantageous.

In the excitation of luminophores dissolved in a fluid in slits or apertures through an upper slab excitation light may be sent through the upper slab. If the excitation radiation is TE polarized, an evanescent field may be generated and the excitation radiation does essentially not propagate through the slit provided that the slit is sufficiently deep. The generated luminescence may then be detected through the upper slab and through a lower slab. When using slits and an evanescent excitation volume, TE polarized excitation light is preferred over TM polarized light, because of its significantly smaller penetration depth into the slits.

The application number US 2006/0034729 A1 by Poponin, V. discloses an optical sensor with layered plasmon structure for enhanced detection of chemical groups by surface enhanced Raman spectroscopy (SERS). The application number WO 2007/034395 A2 by Koninklijke Philips Electronics N.V. discloses a luminescence sensor comprising at least two wire grids. This application was published after the priority date of the present specification and pertains to the background art only for the purpose of assessing novelty. The application number US 2006/0056463 A1 by the Hewlett Packard Company discloses integrated radiation sources and amplifying structures, and methods of using the same.

### SUMMARY OF THE INVENTION

Accordingly, the invention preferably seeks to mitigate, alleviate or eliminate one or more of the above mentioned problems singly or in any combination. In particular, it may be seen as an object of the present invention to provide a biosensor that solves the above mentioned problems by providing an improved luminescence sensor capable of generating luminescent radiation from supplied luminescent particles located in the cavity of the luminescence sensor.

This object and several other objects are obtained in a first aspect of the invention by providing a luminescence sensor according to claim 1 .

The invention is particularly, but not exclusively, advantageous for obtaining a luminescence sensor capable of generating luminescent radiation from luminescent particles located in the cavity between the input reflector and the output reflector.

A rather large fraction, preferably greater than 50 %, of the input radiation impinging the input reflector of the luminescence detector may be reflected away from the luminescence sensor. Another fraction of the input radiation, preferably less than 50% may be transmitted into the cavity. Since the cavity may satisfy the resonance conditions of the input radiation, and due to the possibly large reflection coefficient of the output reflector, possibly being larger than 0.5, the fraction of input radiation in the cavity may be subjected to an increase of cavity excitation energy of radiation. Due to an increase of the cavity excitation energy which excites supplied luminescent particles, the energy of the luminescent radiation may increase in correspondence to the increase of the cavity excitation energy.

It may be an advantage of the first aspect to achieve generation of increased cavity excitation energy, since such increased cavity excitation energy may increase the generated energy of luminescent radiation from luminescent particles located in the cavity.

It may also be an advantage of the first aspect to achieve an increased ratio of luminescent radiation relative to input radiation being radiated out of the luminescence sensor. This advantage may be achieved by the increased cavity excitation energy in combination with the reflection coefficients of the input reflector and the output reflector being greater than 0.5.

It may be another advantage that the luminescent power/energy generated from luminescent particles located in the cavity is significantly higher than the luminescent power/energy generated from luminescent particles located outside the cavity so that the generated luminescent radiation is substantially localised to the cavity.

In an embodiment at least one of the input reflector and the output reflector of the luminescence sensor is a wire-grid having apertures with at least two dimensions of the apertures in the plane of the wire-grid being below the diffraction limit of the input radiation. It may be an advantage of this embodiment that both TE and TM polarised radiation in front of the input reflector is suppressed. That is, the transmission through the cavity of such radiation generated in front of the cavity may be reduced.

In another embodiment the apertures of the wire-grid of the input reflector are oriented for receiving the input radiation, where the electric field of the input radiation is polarised parallel with a longitudinal dimension of the apertures. It may be an advantage of this embodiment that radiation polarised in the longitudinal dimension of the apertures is subjected to a high reflection from the input reflector.

In a further embodiment the longitudinal dimension of the apertures of the wire-grid of the input reflector are oriented parallel with a longitudinal dimension of the apertures of the wire-grid of the output reflector. It may be an advantage of this embodiment that input radiation having the electric field polarised in the longitudinal dimension of the apertures, may generate an increased cavity excitation energy while the input radiation is simultaneously prohibited from being transmitted though the input reflector and the output reflector.

In an embodiment of the invention the reflection coefficient of the input reflector is greater than 0.7, preferably greater than 0.8, for example 0.93, for radiation having the first predetermined wavelength and a polarisation direction of the input radiation. It may be an advantage that the reflection coefficient of the input reflector is greater than 0.7 in order to increase the ratio of luminescent radiation over input radiation being radiated out of the luminescence sensor. It may be a further advantage that the cavity excitation energy is increased.

In a similar embodiment the reflection coefficient of the output reflector is greater than 0.8, preferably greater than 0.9, for example 0.98, for radiation having the first predetermined wavelength and a polarisation direction of the input radiation. It may be a further advantage that the reflection coefficient of the output reflector is greater than 0.8 in order to increase the ratio of luminescent radiation over input radiation being radiated out of the luminescence sensor. It may be a further advantage that the cavity excitation energy is increased.

In an embodiment the duty-cycle of the wire-grid of the output reflector is less than 0.9, preferably less than 0.75 and more preferred less than 0.65, for example 0.25, and the duty-cycle of the wire-grid of the input reflector is less than 0.9, preferably less than 0.85 and more preferred less than 0.8, for example 0.63. It may be an advantage that the duty-cycles of the input reflector and the output reflector are less than 0.9 in order to increase the ratio of luminescent radiation over input radiation being radiated out of the luminescence sensor. It may be a further advantage that the cavity excitation energy is increased.

In another embodiment at least one of the wire-grid of the input reflector and the wire-grid of the output reflector is permeable to fluid. I may be an advantage of this embodiment that fluid containing luminescent particles are supplied to the cavity through the at least one wire-grid.

In a further embodiment at least one of the wire-grid of the input reflector and the wire-grid of the output reflector is fixed on a transparent substrate. It may be an advantage of this embodiment that a wire-grid fixed on a transparent substrate is more durable than a free standing wire-grid.

In an embodiment at least one of the input reflector and the output reflector is a non-permeable reflector which may be an advantage since the cavity may be made by using for example a wire-grid for the input reflector and a reflecting surface for the output reflector.

In a second aspect the present invention relates to the use of a luminescence sensor for generating luminescent radiation according to claim 11.

In a third aspect the present invention relates to a method for choosing a duty cycle of a wire-grid of an input reflector and/or an output reflector according to claim 12.

The values of duty cycles of the input reflector and/or the output reflector may be chosen from different criteria, for example duty cycles that provides the greatest cavity excitation energy, a combination of cavity excitation energy and permeability of the wire-grids or changes in cavity excitation energy versus tolerances of wavelength of the input radiation.

In a fourth aspect the present invention relates to a detection system for biosensing according to claim 13.

In a fifth aspect the present invention relates to a method for biosensing according to clam 14.

The basic idea of the invention relates to increasing the energy of the excitation radiation in the cavity between an input reflector and an output reflector by exploiting the resonance properties of the cavity. By providing input and output reflectors having relatively high reflection coefficients it may be achieved to effectively increase the excitation radiation and to effectively prohibit the excitation radiation from being transmitted out of the luminescence sensor. Thereby it may be achieved that input radiation is effectively filtered away from the luminescence radiation so that an associated radiation detector placed relative to the luminescence sensor is capable of detecting only luminescent radiation with high resolution.

These and other aspects of the invention will be apparent from and elucidated with reference to the embodiments described hereinafter.

### BRIEF DESCRIPTION OF THE DRAWINGS

The present invention will now be explained, by way of example only, with reference to the accompanying Figures, where
Fig. 1 shows a schematic illustration of a detection system 100 for biosensing comprising a luminescence sensor 101, a container 160, a radiation source 111 and a detector 130.
Fig. 2 shows an illustration of a luminescence sensor 101.
Fig. 3 shows a graph showing a simulation of reflection and transmission properties of a wire-grid.
Fig. 4 shows a graph showing a simulation of the energy enhancement of radiation inside the cavity of a luminescence sensor.
Fig. 5 shows a graph showing the energy enhancement of radiation.
Fig. 6A shows a graph showing a simulation of the fraction of the input radiation 221,110 which is transmitted through the wire-grid of the output reflector.
Fig. 6B is an illustration of a luminescence sensor where some luminescent particles 650 are located behind the output reflector 104,254.
Fig. 7 shows a graph showing the energy enhancement curve 710 in the cavity as a function of the gap spacing between the input and output reflectors.
Fig. 8 shows a graph showing the wavelength dependence of the enhancement energy.
Fig. 9 shows a graph showing the ratio of the radiation energy inside the cavity and the energy of the transmitted radiation.
Fig. 10 shows a graph showing the radiation energy density 1012 as a function of the position 1013 relative to the thickness of the luminescence sensor 201.
Fig. 11 shows an example of a two-dimensional wire-grid 1100.
Fig. 12 shows a wire-grid fixed on a transparent substrate 1201.
Fig. 13 shows an example where either the input reflector 103 or the output reflector 104 is a reflecting surface 1301.

### DETAILED DESCRIPTION OF THE EMBODIMENTS

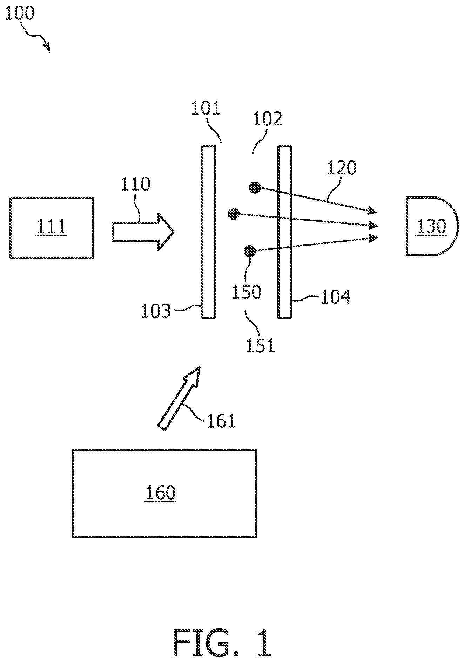

Figure 1 is a schematic illustration of a detection system 100 for biosensing comprising a luminescence sensor 101 according to an embodiment. The luminescence sensor 101 comprises an input reflector 103 and an output reflector 104 which forms an optical cavity 102. The cavity 102 is capable of being provided with luminescent particles 150 which may for example be contained in a fluid 151. The fluid 151 containing luminescent particles 150 may be supplied to the luminescence sensor 101 from a container 160 via a fluid connection 161.

The luminescent particles 150 may be biological molecules having luminophores attached. The biological molecules may for example comprise target molecules that have reacted with probe molecules so that the targets bonds to the probes. Examples of target molecule and probe molecule pairs are antibody-antigen pairs, cell-antibody combinations, strands of DNA pairs, strands of RNA pairs, antibody-antigen pairs and receptor-ligands pairs.

The probe molecules may have been provided in the cavity, so that the probes stick to some surface in the cavity 102, prior to supplying the fluid 150 containing target molecules to the cavity 102.

Alternatively, reacted probe/target pairs or other biological molecules having attached luminophores may be supplied to the luminescence sensor 101.

The target molecules, or the probe molecules, can be provided or conjugated with labelling agents having luminescent or fluorescent properties. Such labelling agents comprise luminophores, quantum dots, fluorophores, chromophores, dyes, luminescent nanoparticles, nanorods, beads and gold particles.

The input reflector 103 is capable of receiving input radiation 110 generated from a radiation source 111 and is capable of transmitting a fraction of the power of the input radiation 110 into the cavity 102. When the distance between the input reflector 103 and the output reflector 104, satisfies the resonance condition for the wavelength of the input radiation 110, the cavity excitation energy of the radiation inside the cavity 102 will increase. Accordingly, when the luminescent particles 150 are illuminated and excited with radiation of increased cavity excitation energy, the luminescent particles 150 will emit luminescent radiation 120. Part of the power of the luminescent radiation 120 will be transmitted through the output reflector 104 and will be received by the detector 130. Accordingly, the detector 130 may provide information about for example the existence, alternatively the quantity, of luminescent particles 150.

Whenever reference is made to an energy, for example radiation energy or cavity excitation energy, this may equally be understood as radiation power or cavity excitation power.

The schematic illustration of a detection system 100 in Figure 1 is only an example of detection system. Accordingly, other ways of combining the luminescence sensor 101, the detector 130, the input radiation 110 and the container 160 exist as will be apparent from other embodiments of the invention. For example, the detector 130 may be placed in front of the luminescence sensor 101.

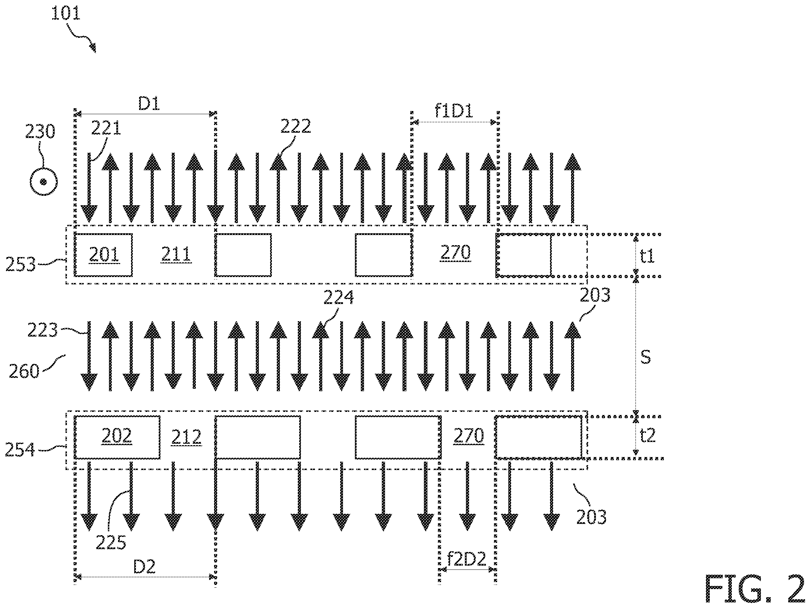

Figure 2 is an illustration of a luminescence sensor 101 comprising an input reflector 253 and an output reflector 254. The input reflector 253 is a wire-grid 270 formed by strips 201 and apertures 211. Similarly, the output reflector 254 is a wire-grid 270 formed by strips 202 and apertures 212. The strips 201,202 and the apertures 211,212 have longitudinal dimensions extending in a direction perpendicular to the plane of Figure 2.

Accordingly the longitudinal dimension of the apertures 211, or the strips 201, of the wire-grid of the input reflector 253 are oriented parallel with the longitudinal dimension of the apertures 212, or the strips 202, of the wire-grid of the output reflector 254. It should be understood that the apertures 211 and 212, or strips 201 and 202, need not be strictly parallel, that is, deviations of a few degrees, for example five degrees, from parallel is allowed.

The strips 201 and 202 can be made of any metal, for example aluminium, gold or silver The wire-grids can be made by processes such as imprint-, laser-, interference-, or deep-UV lithography in combination with etching techniques for patterning the metal.

The geometry of strips 201 and apertures 211 are defined by the distance D1 between adjacent strips. The width of the apertures 211 is given by the distance f1D1, where f1 is the duty cycle of the wire-grid 270. That is, f1 is the ratio of the width of the apertures 211 and the distance D1. The geometry of strips 202 and apertures 212 is equivalently defined by the distance D2, distance f2D2 and the duty cycle f2 which is the ratio of the width of the apertures 212 and the distance D2.

The depth of the strips 201 and the strips 202 are denoted by t1 and t2, respectively. The distance S between the wire-grid 270 of the input reflector 253 and the wire-grid 270 of the output reflector 254 is defined by the gap S.

The gap S between the input reflector 253 and the output reflector 254 constitutes a nano-cavity 260 capable of enhancing the energy of radiation 223, 224 inside the cavity 260.

The wire-grids forming the input reflector 253 and the output reflector 254 are surrounded by an environment 203,151. The environment 203,151 may be fluid, for example water. Thus, the environment 203 may fill the openings of the apertures 211,212 as well as the cavity 260. It should be remarked that the environment 203 in the cavity 260 between the input and output reflectors 253,254 in general can be different from the environment 203 in front of the input reflector 253 or behind the second reflector 254.

The luminescence sensor 101 is adapted to receive input radiation 221 by having the apertures of the wire-grid 270 of the input reflector oriented for receiving the input radiation having the electric field polarised parallel with a longitudinal dimension of the apertures. Accordingly, the input radiation 221 is TE polarised (230), that is, the input radiation has a polarisation direction where the electric field of the input radiation 221 is polarised perpendicular to the plane of Figure 2. A fraction of the power of the input radiation 221 is reflected from the input reflector 253 as reflected radiation 222, whereas another fraction of the power of the input radiation 221 is transmitted through the input reflector and into the cavity 260. The radiation inside the cavity 260 comprises forward propagating radiation 223 and backward propagating radiation 224. A fraction of the power of the radiation inside the cavity 260 will be transmitted through the output reflector 254 as transmitted radiation 225. Another fraction of the power of the radiation inside the cavity 260 will be transmitted through the input reflector 253 as reflected radiation 222.

When the wavelength of input radiation 221 and the distance S are selected so that the cavity 260 operates in resonance, an enhancement of the energy of the radiation 223, 224 inside the cavity radiation inside the cavity is achieved. Accordingly, the cavity excitation energy is increased, so that the luminescence radiation 120 is equally increased.

The input radiation 221 is generated by a radiation source 111 for example a laser, a gas laser or a diode laser. Alternatively, the input radiation 221 may be generated by other radiation sources such as light emitting diodes having broad spectral bandwidths.

The wavelength of the input radiation 221 can be within the uv-spectrum from 10-400 nm, the visible spectrum from 380-780 nm, or the infrared spectrum from 750-1600 nm. When reference is made to a wavelength of radiation, even though reference is made to a single wavelength number, the radiation should be understood as having a spectral distribution for example being centred about the wavelength number.

The distances D1 and D2 can be within the range from 10-1000 nm depending on the wavelength of the input radiation. The depths t1 and t2 can be within the range 10-1000 nm, preferably within 50-200 nm, for example 100 nm. The duty cycles f1 and f2 may range from zero to one.

The widths of the apertures f1D1 and f2D2, in the plane of the wire-grid 270 are preferably equal to or below the diffraction limit of the input radiation 110. Here, and elsewhere in the description, the diffraction limit should be understood as the diffraction limit of the input radiation in the medium that fills the apertures 211,212 and the cavity 260. The longitudinal dimension of the strips 201, 202 and the apertures 211,212, in the plane of the wire-grid 270, has a length greater than the diffraction limit of the input radiation 110. For example the length of the longitudinal dimension is greater than 146 nm for a wavelength of the input radiation 110,221 of 380 nm, or for example greater than 300 nm for a wavelength of the input radiation 110,221 of 780 nm, assuming that the environment 203 that fills the apertures 211,212 and/or the cavity 260 has an index of refraction of 1.3 corresponding to the index of water.

The wire-grid 270 having one dimension below the diffraction limit and one dimension greater than the diffraction limit will be referred to as a one-dimensional wire-grid. Accordingly, the apertures of the one-dimensional wire-grid 270 may be seen as elongated holes such as rectangular holes or elliptical holes.

It is an advantage that the wire-grids of the input reflector 253 and the output reflector 254 have aperture openings making the reflectors permeable to fluids 151. Thus, the fluid 151 containing luminescent particles may be transferred into the cavity 160 via the apertures in the wire-grids.

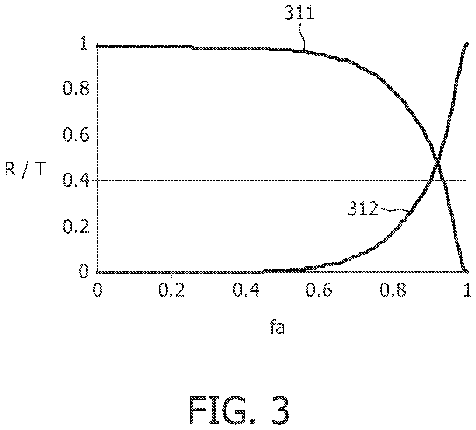

Figure 3 is a graph 300 showing a simulation of reflection and transmission properties of a wire-grid 270 where curve 311 shows the reflection coefficient and curve 312 shows the transmission coefficient of a single wire-grid 270 as a function of the duty cycle fa. Thus, the duty cycle fa along the abscissa of the graph 100 corresponds to f1 or f2 as described in connection with Figure 2, that is, fa is the ratio of the width of an aperture over the width of a distance D1 or D2. The ordinate of the graph 300 shows the reflection and transmission coefficients R and T for the reflection curve 311 and the transmission curve 312, respectively.

A duty cycle fa equal to zero is equivalent to a wire-grid 270 where the width of apertures 211 or 212 is zero, that is, the wire-grid 270 is completely closed. A duty cycle fa equal to one is equivalent to a wire-grid 270 where the width of the strips 201 or 202 is zero, that is, the wire-grid 270 is completely open.

Figure 3 shows that the reflection coefficient 311 of the wire-grid 270 decreases as the duty cycle fa increases (i.e. the wire-grid 270 becomes more open), whereas the transmission coefficient 312 of the wire-grid 270 increases as the duty cycle fa increases.

The curves in Figure 3 are calculated using input radiation having a wavelength of 650 nm and being TE polarised, that is, the electric component of the radiation is directed along the longitudinal direction of the strips 201 or 202. The wire-grid 270 has a depth t1 of 100 nm and a distance D1 is 200 nm. The material of the strips 201 is aluminium.

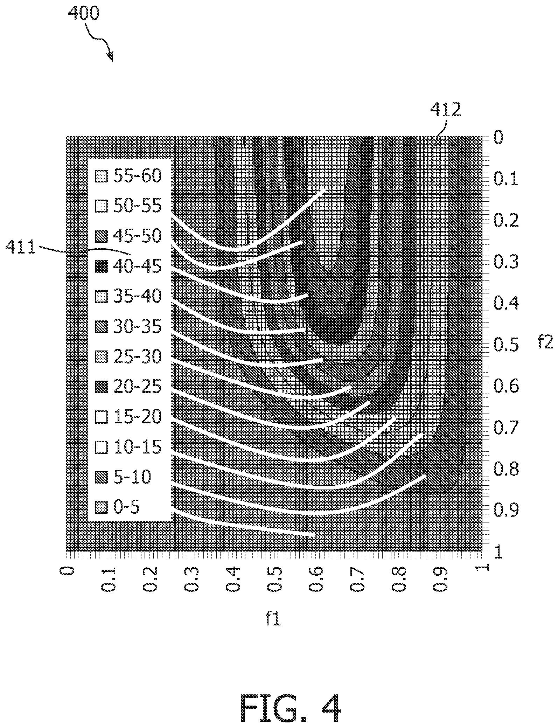

Figure 4 is a graph 400 showing a simulation of the energy enhancement of radiation 223, 224 inside the cavity 260 of a luminescence sensor 101 corresponding to the luminescence sensor shown in Figure 2. The cavity 260 is formed by the gap S between a wire-grid 270 of an input reflector 253 and a wire-grid 270 of an output reflector 254. The contour regions 412 show the simulated energy enhancement as a function of duty cycle f1 along the abscissa and the duty cycle f2 along the ordinate. Thus, the contour regions 412 are calculated by varying f1 and f2 and deriving the energy enhancement for each variation. The energy enhancement numbers 411 shows the numerical energy enhancement for distinct contours 412. The energy enhancement numbers 411 should be understood relative to the input radiation 110 which has a numerical energy value of one. For example, the energy enhancement in front of a 100% reflection mirror is two for normal-incident radiation being reflected on the mirror, assuming that the incident radiation has an energy value of one.

The curve in Figure 3 is calculated using normal incident input radiation 110 having a wavelength of 650 nm and being TE polarised. The wire-grids have depths t1 and t2 of 100 nm and distances D1 and D2 of 200 nm. The material of the strips 201 is aluminium. The gap S is chosen so that the resonance condition is satisfied for input radiation 110 in the cavity 260.

Thus, the simulation of contours as shown in Figure 4 provides a method for obtaining the optimal duty cycles f1 and f2 by varying the duty cycles f1 and f2 until an optimum energy enhancement is found. Alternatively, the optimal reflection coefficients of the input reflector 253,103 and/or the optimal reflection coefficients of the output reflector 254,104 can be obtained by varying the reflection coefficients of the input reflector and/or the output reflector until an optimum energy enhancement is found.

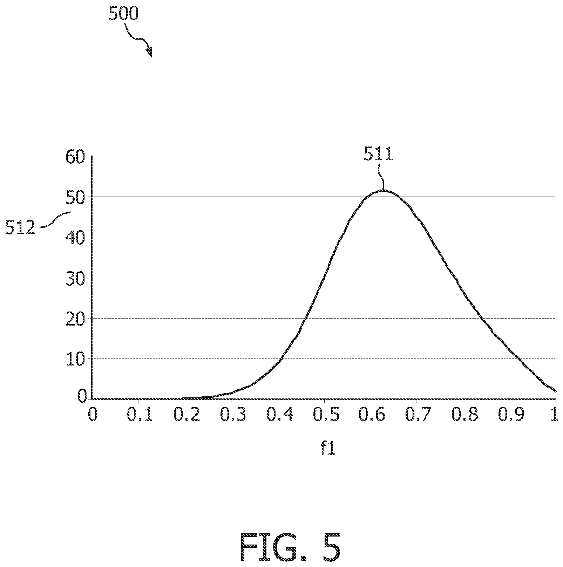

Figure 5 shows a graph 500 based on the same simulation as in Figure 4, where the duty-cycle f2 is fixed to 0.25 and the duty cycle f1 is varied from zero to one along the abscissa. The ordinate shows the energy enhancement 512. The energy enhancement curve 511 shows a peak enhancement of 51.6 when the duty cycle f1 is 0.63.

With reference to Figure 5, the duty cycle f2=0.25 of the wire-grid 270 of the output mirror corresponds to a reflection coefficient of approximately 0.98, whereas the duty cycle fl=0.63 of the wire-grid 270 of the input mirror corresponds to a reflection coefficient of approximately 0.93 as may be verified by reading the reflection coefficients from Figure 3.

Thus, the high energy enhancement of 51.6 is achieved by the use of an input mirror 253 and an output mirror 254 having particular high reflection coefficients. In other configurations of input mirrors 253 and output mirrors 254, for example where the geometry of the wire-grids are different from the example in Figures 4-5 or where the input radiation 221 has a different wavelength, other optimum duty cycles f1 and f2 may be calculated.

However, in order to obtain a high energy enhancement in the cavity 260, the input reflector 253 and the output reflector 254 should have particular high reflection coefficients. Preferably, the reflection coefficient of the input reflector 253 should be greater than 0.5 corresponding to a duty cycle smaller than 0.9 which results in an energy enhancement of 5-10 or more as may be verified from Figure 4. More preferred, the reflection coefficient of the input reflector 253 should be greater than 0.7 corresponding to a duty cycle smaller than 0.85 which results in an energy enhancement of 15-20 or more. Even more preferred, the reflection coefficient of the input reflector 253 should be greater than 0.8 corresponding to a duty cycle smaller than 0.8 which results in an energy enhancement of 25-30 or more.

Similarly, the reflection coefficient of the output mirror 254 should preferably be greater than 0.5 corresponding to a duty cycle smaller than 0.9 which may result in an energy enhancement of 0-5 or more as may be verified from Figure 4. More preferred, the reflection coefficient of the input reflector 253 should be greater than 0.8 corresponding to a duty cycle smaller than 0.75 which may result in an energy enhancement of 10-15 or more. Even more preferred, the reflection coefficient of the input reflector 253 should be greater than 0.9 corresponding to a duty cycle smaller than 0.65 which results in an energy enhancement of 25-30.

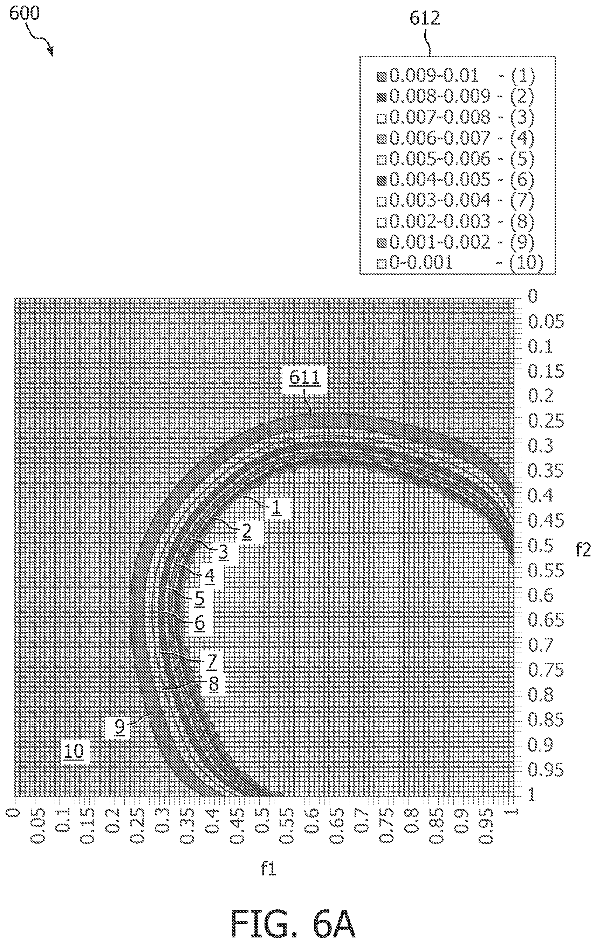

Figure 6A is a graph 600 showing a simulation of the fraction of the input radiation 221,110 which is transmitted through the wire-grid 270 of the output reflector 254. The contours 611 show regions having numerical values 612 of fractions of the input radiation energy over the radiation energy which is transmitted through the wire-grid of the output reflector 254. The radiation ratios given by numerical values 612 will be referred to as transmission fractions.

Accordingly, the graph 600 shows that approximately 0.1 percent of the input radiation energy 221 is transmitted though the output reflector. A particular calculation shows that for duty cycles fl=0.63 and f2=0.25 the fraction of transmitted radiation is 0.16 percent as may be verified from Figure 6A. Comparing the transmission fraction of 0.16 percent with the energy enhancement of 51.4, as shown in Figure 5, results in a suppression fraction of the input radiation behind the output reflector of 51.6/0.0016=32250.

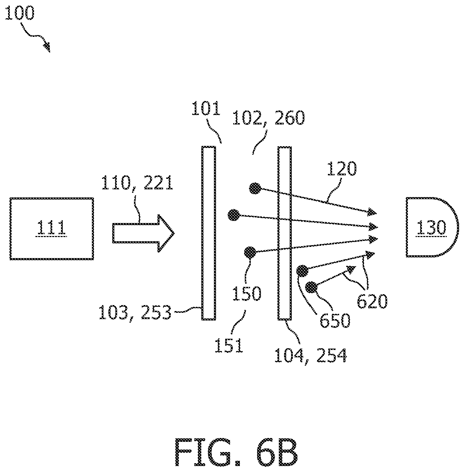

Figure 6B is an illustration of a luminescence sensor 101 where some luminescent particles 650 are located behind the output reflector 104,254 as may be the case for example since luminescent particles 150 inside the cavity 102,260 may travel through the permeable wire-grid of the output reflector 104,254. Features in Figure 6B having numerals that are identical to numerals of previously described features, have identical or corresponding functions as those features described previously and, therefore, a description will be omitted here. Since the energy of the luminescence 120 generated by the luminescence particles 150 inside the cavity is proportional to the energy of radiation inside the cavity 102 which again corresponds to the energy enhancement factor (eg. 51.6), the suppression factor of 32250 indicates how efficiently the luminescence radiation 620 generated by luminescence particles 650 behind the cavity is suppressed relative to the luminescence 120 generated by the luminescence particles 150 inside the cavity. That is, since the luminescence particles 650 outside the cavity are excited with a radiation energy that is a factor of approx. 32250 (the suppression factor) lower than the radiation energy which excites the luminescent particles 150 inside the cavity, the luminescence 620 generated outside the cavity is a factor 32250 lower than the luminescence 120 generated inside the cavity. A great suppression factor is advantageous since it enables more accurate and localized measurements of a for example a quantity or concentration of luminescent particles 150.

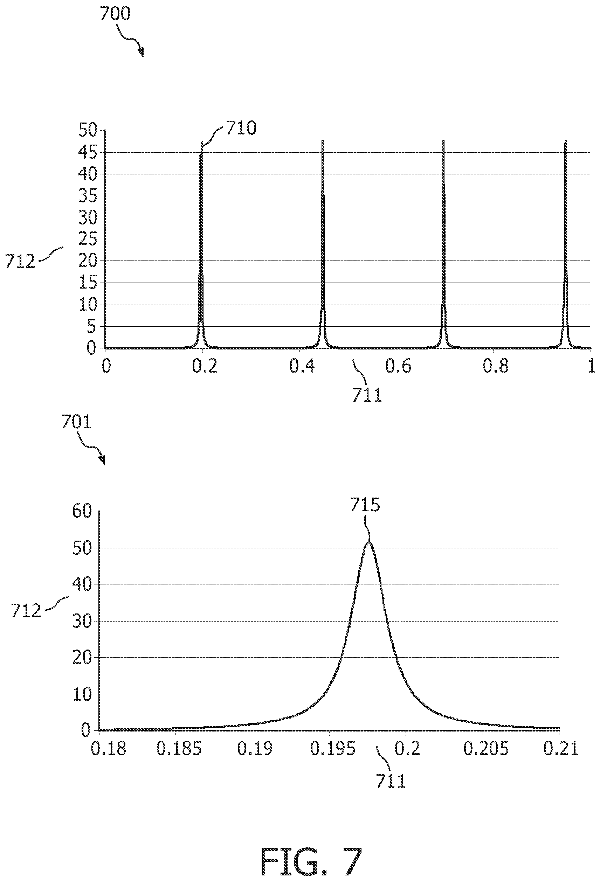

Figure 7 shows a graph 700 showing the energy enhancement curve 710 in the cavity 260 as a function of the gap spacing 711,S between the input reflector 253 and the output reflector 254. The energy enhancement is shown along the ordinate 712. Graph 700 shows the locations where the gap spacing 711 satisfies the condition for resonance of the input radiation 221 in the cavity 260. The first location of gap spacing 711 which satisfies the resonance condition is given by the gap distance S equal to approximately 198 nm. The curve 715 in graph 701 shows a magnified version of the first energy enhancement curve 710.

The gap spacing 711 or gap distance S is beneficially chosen as the smallest gap distance S satisfying the resonance condition, since the spectral bandwidth of the energy enhancement curve 710 is inversely proportional with gap distance S.

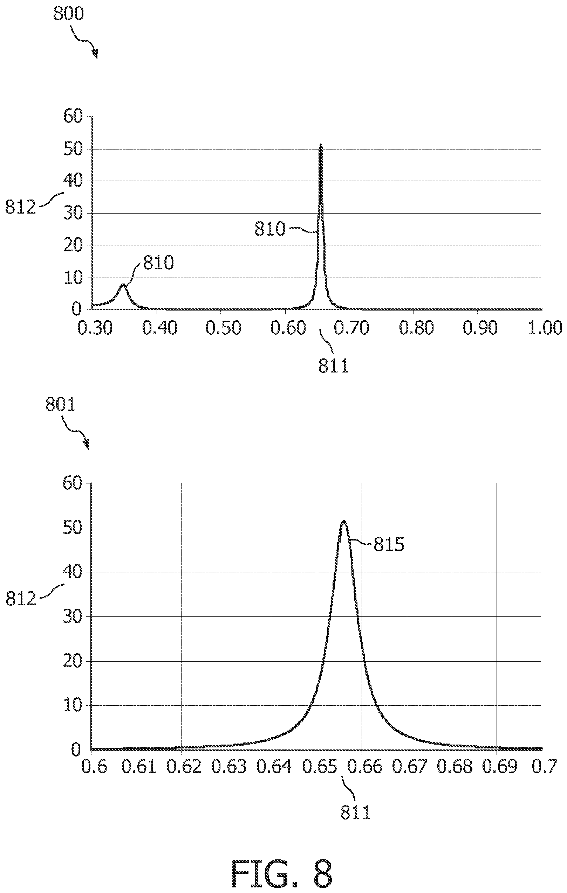

In Figure 8 the curve 810 of graph 800 shows the wavelength dependence 811 of the enhancement energy 812, given by curve 810, inside the cavity 260 when the gap 711,S is chosen to S=200 nm. In comparison with the energy enhancement curve 710 depicted in Figure 7, the maximum energy enhancement factor of 51.4 is now located at wavelength of 656 nm corresponding to the first longitudinal resonance mode of the cavity 260 with S=200 nm. The first peak in the enhancement energy around a wavelength of 348 nm, which is the second longitudinal mode, shows a significantly lower energy enhancement of only 7.7 as well as a broader spectral distribution (FWHM = 22 nm) as compared to the spectral distribution at 656 nm where the FWHM is only 7.2 nm. The differences in the energy enhancement factor and the FWHM values are caused by lower reflection coefficients and higher transmission coefficients of the input and output reflectors 102,104 at the 348 nm wavelength. Curve 815 in graph 801 shows the resonance peak at 656 nm in greater detail.

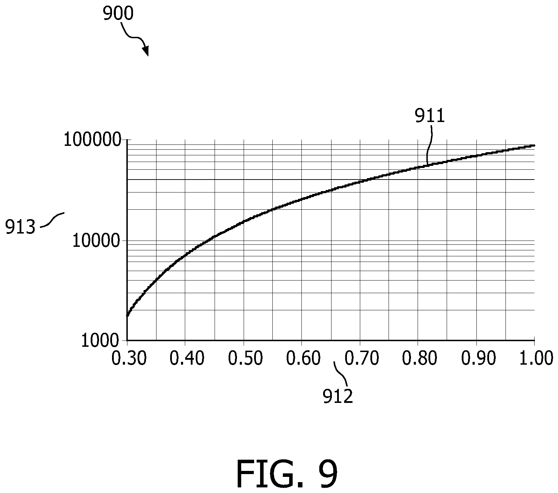

Figure 9 is a graph 900 where the curve 911 shows the suppression factor 913, i.e. the ratio of the radiation energy inside the cavity 260 and the transmission fraction as defined in relation to Figure 6A. The curve 911 shows the suppression factor 913 as a function of the wavelength 912 (in micrometers).

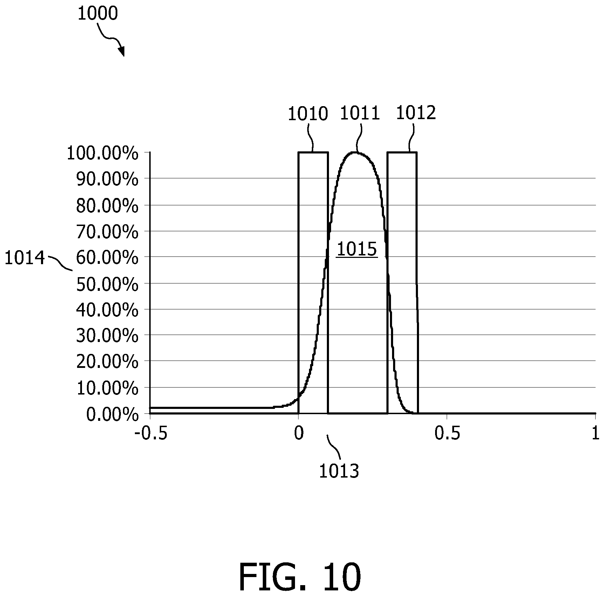

Figure 10 is a graph showing the radiation energy density 1012 as a function of the position 1013 relative to the thickness of the luminescence sensor 201. The input reflector 253 is indicated by line 1010 and the output reflector is indicated by line 1011. The ordinate 1014 shows the normalised energy density. As the input radiation 110 enters the wire-grid 270 of the input mirror 253 at position 0, the radiation energy increases throughout the depth t1 of the aperture. In the cavity 1015, the radiation energy experiences a further increase, until the radiation energy starts decreasing so the energy approaches zero at the end face of the wire-grid 270 of the output reflector 1011.

Even though the incident radiation 110 is TE polarised some amount of TM polarised radiation may be generated in front of the input mirror 253, for example generated by luminescent particles. TM polarised radiation is effectively transmitted through the wire-grid 270 since the electric field direction is perpendicular to the longitudinal direction of the apertures 211. So whereas only for example 0.18% of the TE polarised input radiation may be transmitted through the wire-grid 270 of the output reflector 254, as much as 100 % of the TM polarised input radiation may be transmitted through the wire-grid 270 of the output reflector 254.

Instead of using one-dimensional wire-grids where the width of the elongated apertures is below the diffraction limit and the longitudinal dimension of the elongated apertures is greater than the diffraction limit, it is possible to use two-dimensional wire-grids 270 where two dimensions of the apertures, in the plane of the wire-grid 270, are below the diffraction limit. Accordingly, the apertures of the two-dimensional wire-grid 270 may be seen as circular, elliptical, square or rectangular holes.

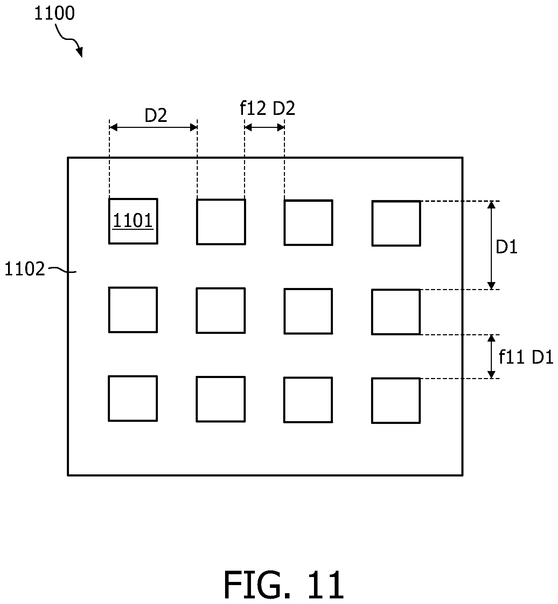

Figure 11 shows an example of a two-dimensional wire-grid 1100, where two dimensions of the apertures f11D1 and f12D2, in the plane of the wire-grid 1100, are below the diffraction limit. Both the two-dimensional wire-grid 1100 shown in Figure 11 and the one-dimensional wire-grid 260 shown in Figure 2 can be equally used for any of the input reflector 253 and the output reflector 254 and, therefore, whenever reference is made to a wire-grid, this should be understood as being either a two-dimensional wire-grid 270,1100 or a one-dimensional wire-grid 270,1100.

Similar to the one-dimensional wire-grid 270, the two dimensional wire-grid 270 is also permeable for fluids.

A two-dimensional wire-grid 270 has reflection characteristics for TM polarised incident radiation which is equal to, or corresponds, to the reflection characteristics for TE polarised incident radiation as depicted in Figure 3. Accordingly, when the input reflector 103,254 is a two-dimensional wire-grid, the transmission of TM polarised radiation through the input reflector and, therefore, also through the output reflector is greatly reduced compared to using a one-dimensional wire-grid 270 in place of the input reflector 103.

An advantage of using a two-dimensional wire-grid for the input reflector 254 is that both TE and TM polarised radiation generated in front of the input reflector 103 is suppressed. That is, the transmission through the cavity of such radiation generated in front of the cavity is reduced. Accordingly, TE and TM polarised radiation in form of input radiation 110 and/or luminescent radiation 120 caused by luminescent particles located in front of the luminescence sensor 101 is substantially prohibited from being transmitted through the luminescence sensor 101, except from the spectral portion of the radiation that is resonant with (i.e., is being enhanced) the cavity (102). In general, the spectrum of the generated luminescence will be significantly broader (typically 50 nm) than the spectrum of the input radiation 110 (for example the spectrum of the input radiation 110 of a HeNe laser can be 2 pm (picometer) corresponding with coherence length of 20 cm). Due to the differences in the spectrum of the luminescent radiation generated in front of the luminescence sensor 101 and the spectrum of the input radiation 110, the luminescent radiation generated in front of the luminescence sensor 101 is effectively suppressed, or at least substantially suppressed, relative to the luminescent radiation 120 generated in the cavity 102.

Thus, a cavity 260 formed in the gap between a two-dimensional wire-grid 270 and a one dimensional wire-grid 270 may be seen as low-finesse cavity for TM polarised radiation, because the output reflector 254 has a high transmission for TM polarised radiation which inhibits a significant energy enhancement for TM polarised radiation.

When a two-dimensional wire-grid 270 is used for the input reflector 253, a part of the TM polarised luminescent radiation 120 will be emitted directly out through the one-dimensional output reflector 254, whereas another part of the TM polarised luminescent radiation 254 will be emitted towards the two-dimensional wire-grid 270 of the input reflector 253 where the radiation will be reflected back towards and out through the output reflector 254.

In case of a two-dimensional wire-grid 270, two duty cycles f11 and f12 of the wire-grid 270 may be defined for the two dimensions in the plane of the apertures. In a special case f11 is to be equal to f12. The duty cycles f11 and f12 are defined in the same way for two-dimensional wire-grids 270 as for one-dimensional wire-grids, that is, the first duty cycle f11 is defined in a first direction in the plane of the wire-grid and the second duty cycle f12 is defined in a second direction, in the plane of the wire-grid, where the second direction is perpendicular or substantially perpendicular to the first direction.

In the special case where f11 equals f12, the method for obtaining the optimal duty cycles f11 and f2 corresponds to the method for optimising the energy enhancement as described in connection with Figure 4. Thus, the method includes varying the duty cycles f11 and f2 until an optimum energy enhancement is found. In the general case where f11 differs from f12, the energy enhancement can be optimised by varying the duty cycles f11, f12 and f2 until an optimum energy enhancement is found.

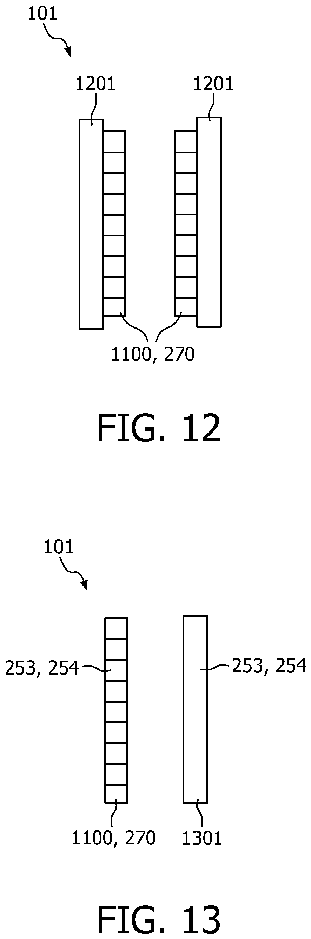

It may be advantageous to fix a wire-grid 270 on a transparent substrate 1201 such as glass, as shown in Figure 12. Accordingly, the input reflector may comprise either a one-dimensional or a two-dimensional wire-grid 270,1100 being fixed on a transparent substrate 1201. Alternatively, or additionally the output reflector may comprise either a one-dimensional wire-grid 270 or a two-dimensional wire-grid 270,1100 being fixed on a transparent substrate 1201. The transparent substrate 1201 can be placed on either side of the wire-grid 1201.The transparent substrate 1201 should be transparent for the input radiation 110 when it is used for the input reflector 103, whereas the transparent substrate should be transparent both for the input radiation 110 and the luminescent radiation 120 when it is used for the output reflector 104. In the case where both the input reflector and the output reflector utilise transparent substrates the fluid 150 may be supplied to the cavity 102 via the opening between the reflectors.

It may be advantageous to place the detector 130 in front of the input reflector 103. In this case the output reflector 104 is beneficial a two-dimensional wire-grid, either being permeable or fixed to a transparent substrate. In order to transmit TM polarised luminescent radiation through the input reflector towards the detector 130, the input reflector is beneficial a one-dimensional wire-grid, either being permeable or fixed to a transparent substrate.

Either the input reflector 103 or the output reflector 104 may be a non-permeable reflector 1301 as shown in Figure 13. The non-permeable reflector 1301 can be a reflecting surface or a mirror, for example a metal coated mirror or a dielectric coated mirror 13. The reflecting surface 1301 may be totally reflective or semitransparent.

The luminescence detector 101 may be combined with wavelength filters, polarisation filters or other optical components placed in front of the input reflector 103 or between the output reflector 104 and the detector 130 for spectral and/or polarisation filtering purpose.

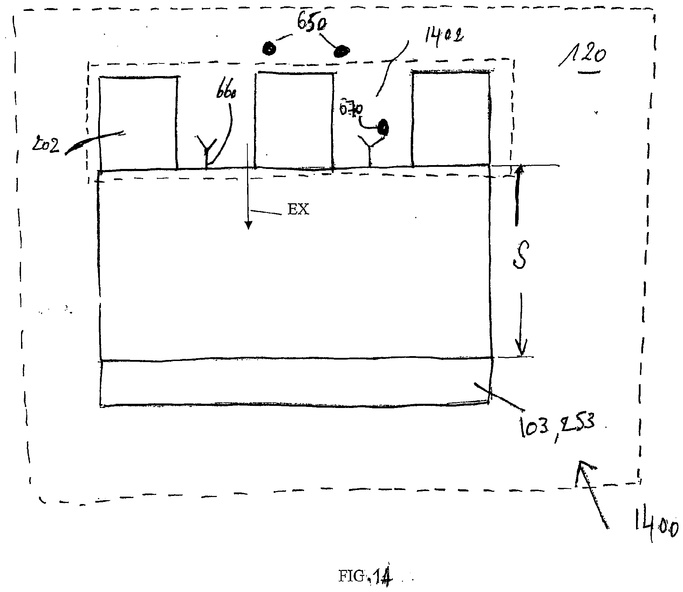

Referring now to figure 14, according to the invention, the cavity which is still defined between the reflectors 103 and 254 may comprise a slab 1401 made of solid material and having a thickness corresponding to the gap S.

Preferably, this slab 1401 is transparent for at least wavelengths between 400 and 900 nm.

At least one of the reflectors, e.g. reflector 254, is permeable for an analyte fluid 120 via apertures 1402 or slits 1402 between the strips 202.

At the interface between the slab 1401 and this permeable reflector 254, and in said apertures or slits, capture probes 660 are positioned.

Luminescent molecules 670 or luminescent labelled molecules 670 present in the medium 120 can bind to these capture probes 660.

As said interface is part of the cavity, excitation of the luminescent molecules 670 can still benefit from the enhancement of the excitation light in said cavity.

The evanescent decay of the intensity of the excitation light also ensures that the luminescence generated by the luminescent molecules or the luminescently labelled molecules 650 which are outside the slits or apertures is substantially lower than the fluorescence generated by the luminescent molecules or the luminescently labelled molecules 670 which are inside slits or apertures.

Further, by extending the depth of the apertures or slits into the slab material (for example in the direction of arrow EX in figure 14), which can be realized by etching techniques for example, it is possible to create binding sites that are positioned more towards the centre (center refers to half of the thickness of gap S) of the cavity (where the excitation energy is the highest, in this respect please refer again to figure 10) by positioning the capture probes 660 at the interfaces between the apertures or slits 1402 and the slab 1401.

An additional advantage of such extension of apertures or slits 1402 into the slab 1401 is an increase of the surface area where the capture probes can be positioned.

In case reflector 254 is a one-dimensional wire grid, the device 1400 is illuminated with an excitation light via reflector 103, and detection of the luminescent radiation generated by the excited luminescent molecules 670 is performed by means of a detector placed at the side of the device which is opposite to the excitation source, namely at the side of the reflector 254.

In a reflective configuration, the detector ay be placed at the same side than the excitation source, namely at the side of reflector 103.
In this case, the excitation light may be TE polarized, in order to undergo a strong reflection by reflector 254.

In case reflector 254 is a two-dimensional wire grid, it is preferable to position the detector at the side of the device which is opposite to the excitation source, namely at the side of the reflector 254.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A luminescence sensor (101) comprising an input reflector (103,253) capable of receiving input radiation (110) with a first predetermined wavelength and an output reflector (104,254), wherein
- a gap (S) between the input reflector and the output reflector constitutes a resonant cavity (102,260) for the input radiation and for receiving luminescent particles and being capable of increasing a cavity excitation energy of radiation having the first predetermined wavelength, said resonant_cavity being capable of outputting luminescent radiation (120),
- at least one of the input reflector and the output reflector is a wire-grid (270,1100) having apertures (211,212), wherein at least one dimension of the apertures in a plane of the wire-grid is below the diffraction limit of the input radiation,
- the reflection coefficient of the input reflector is greater than 0.5 for radiation having the first predetermined wavelength and a polarisation (230) of the input radiation, and
- the reflection coefficient of the output reflector is greater than 0.5 for radiation having the first predetermined wavelength and the polarisation (230) of the input radiation.

2. A luminescence sensor according to claim 1, wherein at least one of the input reflector and the output reflector is a wire-grid (1100) having apertures, wherein at least two dimensions of the apertures in the plane of the wire-grid are below the diffraction limit of the input radiation.

3. A luminescence sensor according to claim 1, wherein the apertures of the wire-grid of the input reflector are oriented for receiving the input radiation, where the electric field of the input radiation is polarised parallel with a longitudinal dimension of the apertures.

4. A luminescence sensor according to claim 1, wherein a longitudinal dimension of the apertures of the wire-grid of the input reflector are oriented parallel with the longitudinal dimension of the apertures of the wire-grid of the output reflector.

5. A luminescence sensor according to claim 1, wherein the reflection coefficient of the input reflector is greater than 0.7, preferably greater than 0.8, for example 0.93, for radiation having the first predetermined wavelength and a polarisation direction of the input radiation.

6. A luminescence sensor according to claim 1, wherein the reflection coefficient of the output reflector is greater than 0.8, preferably greater than 0.9, for example 0.98, for radiation having the first predetermined wavelength and a polarisation direction of the input radiation.

7. A luminescence sensor according to claim 1, wherein a duty-cycle of the wire-grid of the output reflector is less than 0.9, preferably less than 0.75 and more preferred less than 0.65, for example 0.25, and wherein the duty-cycle of the wire-grid of the input reflector is less than 0.9, preferably less than 0.85 and more preferred less than 0.8, for example 0.63.

8. A luminescence sensor according to claim 1 or 2, wherein at least one of the wire-grid of the input reflector and the wire-grid of the output reflector is permeable to fluid.

9. A luminescence sensor according to claim 1 or 2, wherein at least one of the wire-grid of the input reflector and the wire-grid of the output reflector is fixed on a transparent substrate (1201).

10. A luminescence sensor according to claim 1 or 2, wherein at least one of the input reflector and the output reflector is a non-permeable reflector (1301).

11. Use of a luminescence sensor (101) for generating luminescent radiation (120), said luminescence sensor comprising an input reflector (103,253) capable of receiving input radiation (110) with a first predetermined wavelength and an output reflector (104,254), wherein,
- a gap (S) between the input reflector and the output reflector constitutes a resonant cavity (102,260) for the input radiation and for receiving luminescent particles and being capable of increasing a cavity excitation energy of radiation having the first predetermined wavelength, said resonant_cavity being capable of outputting the luminescent radiation,
- at least one of the input reflector and the output reflector is a wire-grid (270,1100) having apertures (211,212), wherein at least one dimension of the apertures in a plane of the wire-grid is below a diffraction limit of the input radiation,
- the reflection coefficient of the input reflector is greater than 0.5 for radiation having the first predetermined wavelength and a polarisation (230) of the input radiation, and
- the reflection coefficient of the output reflector is greater than 0.5 for radiation having the first predetermined wavelength and the polarisation (230) of the input radiation.

12. A method for choosing a duty cycle of a wire-grid (270,1100) of an input reflector (253) and/or an output reflector (254) of a luminescence sensor (101) according to claim 1 or 2, comprising
- providing a model capable of determining a cavity excitation energy as a function of at least one duty cycle of the wire-grid of the input reflector and/or the output reflector,
- varying the at least one duty cycle of the wire-grid of the input reflector and/or the output reflector,
- calculating the cavity excitation energy for each variation of the at least one duty cycle of the wire-grid,
- choosing values of the at least one duty cycle of the wire-grid of the input reflector and/or the output reflector based on the calculated cavity excitation energy.

13. A detection system (100) for biosensing comprising,
- a luminescence sensor (101) according to claim 1,
- a radiation source (111) capable of generating input radiation (110),
- a detector (130) capable of detecting luminescent radiation (120), and
- a container (160) capable of supplying the luminescence sensor with luminescent particles (150).

14. A method for biosensing using a luminescence sensor (101) comprising,
- providing a luminescence sensor according to claim 1,
- providing luminescent particles (150) in the resonant_cavity (102,260) between the input reflector (103,253) and the output reflector (104,254),
- illuminating the input reflector with input radiation (110),
- detecting luminescent radiation (120) emitted from the luminescent particles.

## Patentansprüche

1. Lumineszenzsensor (101), umfassend einen Eingangsreflektor (103, 253), der zum Empfangen von Eingangsstrahlung (110) mit einer ersten vorbestimmten Wellenlänge imstande ist, und einen Ausgangsreflektor (104, 254), wobei
- ein Spalt (S) zwischen dem Eingangsreflektor und dem Ausgangsreflektor einen Resonanzhohlraum (102, 260) für die Eingangsstrahlung und zum Empfangen lumineszierender Partikel darstellt und imstande ist, eine Hohlraumerregungsenergie von Strahlung mit der ersten vorbestimmten Wellenlänge zu erhöhen, wobei der Resonanzhohlraum imstande ist, lumineszierende Strahlung (120) auszugeben,
- zumindest einer von dem Eingangsreflektor und dem Ausgangsreflektor ein Drahtgitter (270, 1100) mit Öffnungen (211, 212) ist, wobei zumindest eine Dimension der Öffnungen in einer Ebene des Drahtgitters unter der Beugungsgrenze der Eingangsstrahlung ist,
- der Reflexionskoeffizient des Eingangsreflektors größer als 0,5 für Strahlung mit der ersten vorbestimmten Wellenlänge und einer Polarisation (230) der Eingangsstrahlung ist und
- der Reflexionskoeffizient des Ausgangsreflektors größer als 0,5 für Strahlung mit der ersten vorbestimmten Wellenlänge und der Polarisation (230) der Eingangsstrahlung ist.

2. Lumineszenzsensor nach Anspruch 1, wobei zumindest einer von dem Eingangsreflektor und dem Ausgangsreflektor ein Drahtgitter (1100) mit Öffnungen ist, wobei zumindest zwei Dimensionen der Öffnungen in der Ebene des Drahtgitters unter der Beugungsgrenze der Eingangsstrahlung sind.

3. Lumineszenzsensor nach Anspruch 1, wobei die Öffnungen des Drahtgitters des Eingangsreflektors zum Empfangen der Eingangsstrahlung orientiert sind, wo das elektrische Feld der Eingangsstrahlung parallel zu einer Längsdimension der Öffnungen polarisiert ist.

4. Lumineszenzsensor nach Anspruch 1, wobei eine Längsdimension der Öffnungen des Drahtgitters des Eingangsreflektors parallel zur Längsdimension der Öffnungen des Drahtgitters des Ausgangsreflektors orientiert ist.

5. Lumineszenzsensor nach Anspruch 1, wobei der Reflexionskoeffizient des Eingangsreflektors größer als 0,7, vorzugsweise größer als 0,8, zum Beispiel 0,93, für Strahlung mit der ersten vorbestimmten Wellenlänge und einer Polarisationsrichtung der Eingangsstrahlung ist.

6. Lumineszenzsensor nach Anspruch 1, wobei der Reflexionskoeffizient des Ausgangsreflektors größer als 0,8, vorzugsweise größer als 0,9, zum Beispiel 0,98, für Strahlung mit der ersten vorbestimmten Wellenlänge und einer Polarisationsrichtung der Eingangsstrahlung ist.

7. Lumineszenzsensor nach Anspruch 1, wobei ein Tastverhältnis des Drahtgitters des Ausgangsreflektors kleiner als 0,9, vorzugsweise kleiner als 0,75 und bevorzugter kleiner als 0,65, zum Beispiel 0,25 ist und wobei das Tastverhältnis des Drahtgitters des Eingangsreflektors kleiner als 0,9, vorzugsweise kleiner als 0,85 und bevorzugter kleiner als 0,8, zum Beispiel 0,63 ist.

8. Lumineszenzsensor nach Anspruch 1 oder 2, wobei zumindest eines von dem Drahtgitter und dem Eingangsreflektor und dem Drahtgitter und dem Ausgangsreflektor fluiddurchlässig ist.

9. Lumineszenzsensor nach Anspruch 1 oder 2, wobei zumindest eines von dem Drahtgitter und dem Eingangsreflektor und dem Drahtgitter und dem Ausgangsreflektor an einem transparenten Substrat (1201) befestigt ist.

10. Lumineszenzsensor nach Anspruch 1 oder 2, wobei zumindest einer von dem Eingangsreflektor und dem Ausgangsreflektor ein nicht durchlässiger Reflektor (1301) ist.

11. Verwendung eines Lumineszenzsensor (101) zum Geniereren lumineszierender Strahlung (120), wobei der Lumineszenzsensor einen Eingangsreflektor (103, 253), der zum Empfangen von Eingangsstrahlung (110) mit einer ersten vorbestimmten Wellenlänge imstande ist, und einen Ausgangsreflektor (104, 254) umfasst, wobei
- ein Spalt (S) zwischen dem Eingangsreflektor und dem Ausgangsreflektor einen Resonanzhohlraum (102, 260) für die Eingangsstrahlung und zum Empfangen lumineszierender Partikel darstellt und imstande ist, eine Hohlraumerregungsenergie von Strahlung mit der ersten vorbestimmten Wellenlänge zu erhöhen, wobei der Resonanzhohlraum imstande ist, lumineszierende Strahlung auszugeben,
- zumindest einer von dem Eingangsreflektor und dem Ausgangsreflektor ein Drahtgitter (270, 1100) mit Öffnungen (211, 212) ist, wobei zumindest eine Dimension der Öffnungen in einer Ebene des Drahtgitters unter einer Beugungsgrenze der Eingangsstrahlung ist,
- der Reflexionskoeffizient des Eingangsreflektors größer als 0,5 für Strahlung mit der ersten vorbestimmten Wellenlänge und einer Polarisation (230) der Eingangsstrahlung ist und
- der Reflexionskoeffizient des Ausgangsreflektors größer als 0,5 für Strahlung mit der ersten vorbestimmten Wellenlänge und der Polarisation (230) der Eingangsstrahlung ist.

12. Verfahren zum Wählen eines Tastverhältnisses eines Drahtgitters (270, 1100) eines Eingangsreflektors (253) und/oder eines Ausgangsreflektors (254) eines Lumineszenzsensors (101) nach Anspruch 1 oder 2, umfassend
- Bereitstellen eines Modells, das imstande ist, eine Hohlraumerregungsenergie als eine Funktion von zumindest einem Tastverhältnis des Drahtgitters des Eingangsreflektors und/oder des Ausgangsreflektors zu bestimmen,
- Variieren des zumindest einen Tastverhältnisses des Drahtgitters des Eingangsreflektors und/oder des Ausgangsreflektors.
- Berechnen der Hohlraumerregungsenergie für jede Variation des zumindest einen Tastverhältnisses des Drahtgitters,
- Auswählen von Werten des zumindest einen Tastverhältnisses des Drahtgitters des Eingangsreflektors und/oder des Ausgangsreflektors auf Basis der Hohlraumerregungsenergie.

13. Detektionssystem (100) für Biosensorik, umfassend,
- einen Lumineszenzsensor (101) nach Anspruch 1,
- eine Strahlungsquelle (111), die zum Erzeugen einer Eingangsstrahlung (110) imstande ist,
- einen Detektor (130), der zum Detektieren von Lumineszenzstrahlung (120) imstande ist, und
- eine Behälter (160), der zum Versorgen des Lumineszenzsensors mit lumineszierenden Partikeln (150) imstande ist.

14. Verfahren zur Biosensorik unter Verwendung eines
Lumineszenzsensors (101), umfassend,
- Bereitstellen eines Lumineszenzsensors nach Anspruch 1,
- Bereitstellen lumineszierender Partikel (150) im Resonanzhohlraum (102, 260) zwischen dem Eingangsreflektor (103, 253) und dem Ausgangsreflektor (104, 254),
- Beleuchten des Eingangsreflektors mit Eingangsstrahlung (110),
- Detektieren lumineszierender Strahlung (120), die von den lumineszierenden Partikeln ausgestrahlt wird.

## Revendications

1. Capteur de luminescence (101) comprenant un réflecteur d'entrée (103, 253) capable de recevoir un rayonnement d'entrée (110) avec une première longueur d'onde prédéterminée et un réflecteur de sortie (104, 254), dans lequel
- un espacement (S) entre le réflecteur d'entrée et le réflecteur de sortie constitue une cavité de résonance (102, 260) pour le rayonnement d'entrée et pour recevoir des particules luminescentes et qui sont à même d'augmenter une énergie de rayonnement d'excitation de cavité ayant la première longueur d'onde prédéterminée, ladite cavité de résonance étant capable de délivrer un rayonnement luminescent (120),
- au moins l'un du réflecteur d'entrée et du réflecteur de sortie est une grille de fil (270, 1100) ayant des ouvertures (211, 212), dans lequel au moins une dimension des ouvertures dans un plan de la grille de fil se situe en dessous de la limite de diffraction du rayonnement d'entrée,
- le coefficient de réflexion du réflecteur d'entrée est supérieur à 0,5 pour un rayonnement ayant la première longueur d'onde prédéterminée et une polarisation (230) du rayonnement d'entrée et
- le coefficient de réflexion du réflecteur de sortie est supérieur à 0,5 pour un rayonnement ayant la première longueur d'onde prédéterminée et la polarisation (230) du rayonnement d'entrée.

2. Capteur de luminescence selon la revendication 1, dans lequel au moins l'un du réflecteur d'entrée et du réflecteur de sortie est une grille de fil (1100) ayant des ouvertures, dans lequel au moins deux dimensions des ouvertures dans le plan de la grille de fil se situent en dessous de la limite de diffraction du rayonnement d'entrée.

3. Capteur de luminescence selon la revendication 1, dans lequel les ouvertures de la grille métallique du réflecteur d'entrée sont orientées pour recevoir le rayonnement d'entrée, où le champ électrique du rayonnement d'entrée est polarisé parallèlement à une dimension longitudinale des ouvertures.

4. Capteur de luminescence selon la revendication 1, dans lequel une dimension longitudinale des ouvertures de la grille de fil métallique du réflecteur d'entrée est orientée parallèlement à la dimension longitudinale des ouvertures de la grille de fil du réflecteur de sortie.

5. Capteur de luminescence selon la revendication 1, dans lequel le coefficient de réflexion du réflecteur d'entrée est supérieur à 0,7, de préférence supérieur à 0,8, par exemple 0,93, pour un rayonnement ayant la première longueur d'onde prédéterminée et une direction de polarisation du rayonnement d'entrée.

6. Capteur de luminescence selon la revendication 1, dans lequel le coefficient de réflexion du réflecteur de sortie est supérieur à 0,8, de préférence supérieure à 0,9, par exemple 0,98, pour un rayonnement ayant la première longueur d'onde prédéterminée et une direction de polarisation du rayonnement d'entrée.

7. Capteur de luminescence selon la revendication 1, dans lequel un cycle de travail de la grille de fil du réflecteur de sortie est inférieur à 0,9, de préférence inférieur à 0,75, mieux encore inférieur à 0,65, par exemple 0,25, et dans lequel le cycle de travail de la grille de fil du réflecteur d'entrée est inférieur à 0,9, de préférence inférieur à 0,85, mieux encore inférieur à 0,8, par exemple 0,63.

8. Capteur de luminescence selon la revendication 1 ou 2, dans lequel au moins l'une de la grille de fil du réflecteur d'entrée et de la grille de fil du réflecteur de sortie est perméable au fluide.

9. Capteur de luminescence selon la revendication 1 ou 2, dans lequel au moins l'une de la grille de fil du réflecteur d'entrée et de la grille de fil du réflecteur de sortie est fixée sur un substrat transparent (1201).

10. Capteur de luminescence selon la revendication 1 ou 2, dans lequel au moins l'un du réflecteur d'entrée et du réflecteur de sortie est un réflecteur non perméable (1301).

11. Utilisation d'un capteur de luminescence (101) pour générer un rayonnement luminescent (120), ledit capteur de luminescence comprenant un réflecteur d'entrée (103, 253) capable de recevoir un rayonnement d'entrée (110) avec une première longueur d'onde prédéterminée et un réflecteur de sortie (104, 254), dans lequel
- un espacement (S) entre le réflecteur d'entrée et le réflecteur de sortie constitue une cavité de résonance (102, 260) pour le rayonnement d'entrée et pour recevoir des particules luminescentes et qui sont à même d'augmenter une énergie de rayonnement d'excitation de la cavité ayant la première longueur d'onde prédéterminée, ladite cavité de résonance étant à même de délivrer le rayonnement luminescent,
- au moins l'un du réflecteur d'entrée et du réflecteur de sortie est une grille de fil (270, 1100) ayant des ouvertures (211, 212), dans lequel au moins une dimension des ouvertures dans un plan de la grille de fil se situe en dessous d'une limite de diffraction du rayonnement d'entrée,
- le coefficient de réflexion du réflecteur d'entrée est supérieur à 0,5 pour un rayonnement ayant la première longueur d'onde prédéterminée et une polarisation (230) du rayonnement d'entrée et
- le coefficient de réflexion du réflecteur de sortie est supérieur à 0,5 pour un rayonnement ayant la première longueur d'onde prédéterminée et la polarisation (230) du rayonnement d'entrée.

12. Procédé de sélection d'un cycle de travail d'une grille de fil (270, 1100) d'un réflecteur d'entrée (253) et/ou d'un réflecteur de sortie (254) d'un capteur de luminescence (101) selon la revendication 1 ou 2, comprenant :
- la fourniture d'un modèle capable de déterminer une énergie d'excitation de cavité en fonction d'au moins un cycle de travail de la grille de fil du réflecteur d'entrée et/ou du réflecteur de sortie,
- la variation du au moins un cycle de travail de la grille de fil du réflecteur d'entrée et/ou du réflecteur de sortie,
- le calcul de l'énergie d'excitation de cavité pour chaque variation du au moins un cycle de travail de la grille de fil,
- la sélection de valeurs du au moins un cycle de travail de la grille de fil du réflecteur d'entrée et/ou du réflecteur de sortie sur la base de l'énergie d'excitation de la cavité calculée.

13. Système de détection (100) pour une biodétection comprenant :
- un capteur de luminescence (101) selon la revendication 1,
- une source de rayonnement (111) capable de générer un rayonnement d'entrée (110),
- un détecteur (130) capable de détecter un rayonnement luminescent (120) et
- un récipient (160) capable de fournir le capteur de luminescence avec des particules luminescentes (150).

14. Procédé de biodétection en utilisant un capteur de luminescence (101) comprenant :
- la fourniture d'un capteur de luminescence selon la revendication 1,
- la fourniture de particules luminescentes (150) dans la cavité de résonance (102, 260) entre le réflecteur d'entrée (103, 253) et le réflecteur de sortie (104, 254),
- l'éclairage du réflecteur d'entrée avec un rayonnement d'entrée (110),
- la détection d'un rayonnement luminescent (120) émis par les particules luminescentes.
